Europäisches Patentamt

European Patent Office

Office européen des brevets

(11) Veröffentlichungsnummer: **0 098 608**
A2

# (12) EUROPÄISCHE PATENTANMELDUNG

(21) Anmeldenummer: 83106666.7

(22) Anmeldetag: 07.07.83

(51) Int. Cl.³: **D 21 H 5/00,** B 32 B 27/06,
B 41 M 3/18

(30) Priorität: 09.07.82 DE 3225753

(43) Veröffentlichungstag der Anmeldung: 18.01.84
Patentblatt 84/3

(84) Benannte Vertragsstaaten: **DE FR GB IT**

(71) Anmelder: Strauven, Kurt, Am Wichelshof 42,
D-5300 Bonn 1 (DE)

(72) Erfinder: Strauven, Kurt, Am Wichelshof 42,
D-5300 Bonn 1 (DE)
Erfinder: Hall, geb. Lotz, Irene, Collins Avenue, Hillcrest
Tower Nassau (BS)

(74) Vertreter: Hennicke, Albrecht, Dipl.-Ing. et al,
Patentanwälte Dipl.-Ing. Buschhoff Dipl.-Ing. Hennicke
Dipl.-Ing. Vollbach Kaiser-Wilhelm-Ring 24,
D-5000 Köln 1 (DE)

(54) Mehrschichten-Tapete und Verfahren zu ihrer Herstellung.

(57) Mehrschichten-Tapete mit einer Trägerschicht (10) aus
Papier und einer Deckschicht (11) aus einer Polyolefin-Folie, die mit einem wasserunlöslichen Kleber (18) zusammenkaschiert sind. Die Deckschicht (11) hat einen Zusatz an
Titandioxid und/oder Kalziumkarbonat, ist mit wasch- und
kratzfesten Farben bedruckt und mit einem Acryl-Mattlack
(16) überzogen, so dass die Tapete das gleiche Aussehen
hat und sich verarbeiten lässt wie eine Papiertapete.

EP 0 098 608 A2

PATENTANWÄLTE
DIPL.-ING. BUSCHHOFF
DIPL.-ING. HENNICKE
DIPL.-ING. VOLLBACH
KAISER-WILHELM-RING 24
5000 KÖLN 1

0098608

Aktenz.:

Reg.-Nr.

**Nr 480**
bitte angeben

KÖLN, den 30.6.1982
**he/we**

Anm.: Herr Kurt Strauven,
Am Wichelshof 42, 5300 Bonn 1

Titel: Mehrschichten-Tapete und Verfahren zu ihrer Herstellung

Die Erfindung betrifft eine Mehrschichtentapete mit einer unteren Trägerschicht aus Papier und einer oberen Deckschicht aus Kunstharz, die mit der Trägerschicht vollflächig verbunden und auf ihrer Oberfläche tapetenartig bedruckt und/oder mit einer Prägemusterung versehen ist. Die Erfindung hat ferner ein Verfahren zum Herstellen einer solchen Mehrschichten-Tapete zum Gegenstand.

Es ist eine Mehrschichten-Tapete bekannt (DE-OS 1 635 732), bei der die Deckschicht aus einem Polystyren-Schaumkunststoff besteht, die mit Tapetenpapier zusammenkaschiert ist. Diese Tapete ist verhältnismäßig steif und nur schwer zu verarbeiten. Ihre Oberfläche erleidet auch durch vorübergehende Druckeinwirkungen leicht bleibende Verformungen, die das Aussehen der Tapete beeinträchtigen. Außerdem ist die Herstellung dieser Isoliertapeten aus Polystyren-Schaumkunststoff schwierig und teuer.

Es gibt auch bereits Mehrschichten-Tapeten, bei denen auf ein Tapetenpapier aufgeschäumtes Polyvinylchlorid aufgebracht ist,

BAD ORIGINAL

um eine bessere Schalldämmung zu erreichen (DE-GM 1 943 923).
Diese PVC-Verbundtapeten haben jedoch den Nachteil, durch verschiedene äußere Einwirkungen, vor allem durch Wärme oder verschiedene Chemikalien, Chlorwasserstoff abspalten zu können,
wodurch eine äußerst unangenehme Umweltbelastung ausgelöst
werden kann.

Aufgabe der Erfindung ist es, diese Nachteile zu vermeiden und
eine Mehrschichten-Tapete zu schaffen und ein Verfahren zur
Herstellung einer solchen Mehrschichten-Tapete anzugeben, die
keine schädlichen Zersetzungsprodukte entwickelt, leicht verarbeitbar ist, sehr strapazierfähig, kratz- und scheuerfest
ist und in ihrem Aussehen von einer wertvollen Papiertapete
nicht zu unterscheiden ist. Außerdem soll die Mehrschichten-Tapete nach der Erfindung nach Wunsch auch als Isoliertapete
hergestellt werden können und auch mit dickeren Abmessungen
wie eine Papiertapete leicht verarbeitbar bleiben.

Diese Aufgabe wird mit der Erfindung dadurch gelöst, daß die
Deckschicht aus einer Polyolefin-Folie besteht, deren Oberfläche und deren Unterfläche eine feine Riffelung aufweist.

Unter "Polyolefin-Folien" werden hier nur Folien aus reinen
Polyolefinen, also keine halogenierten Polyolefine verstanden,
da diese halogenierten Polyolefine schädliche Stoffe abspalten können, was mit der Erfindung gerade vermieden werden
soll. Folien aus reinen Polyolefinen, wie beispielsweise aus
Polyäthylen oder Polypropylen, sind geruchsneutral und leicht
biegsam, so daß sie in Verbindung mit Papier die Verarbeitbarkeit nicht beeinträchtigen. Nach einem weiteren Merkmal der
Erfindung erhält die Deckschicht-Folie mindestens im Bereich
ihrer Oberfläche einen Zusatz von mattierenden Stoffen mit hohem Brechungsindex, insbesondere von Titandioxid und Kalziumkarbonat. Hierdurch erlangen die Tapeten die erwünschte helle
Oberfläche. Die feine Riffelung auf beiden Seiten ermöglicht
einerseits eine feste, vollflächige Verklebung mit der Papierbahn und andererseits eine gute Haftung der auf der Oberfläche aufzutragenden Farben.

0098608

Die bedruckte und/oder geprägte Oberfläche der Deckschicht
kann mit einem flexiblen, matten Kunstharzlack überzogen sein.
Die Tapete erlangt hierdurch nicht nur das erwünschte matte
Aussehen einer Papiertapete, sondern sie wird auch kratz- und
scheuerfest und damit abwaschbar.

Wie bereits erwähnt, besteht die Deckschicht vorteilhaft aus
Polyäthylen oder Polypropylen, wobei sie je nach Verwendungszweck vorzugsweise eine Dicke von $45\mu$ bis $150\mu$ aufweisen
kann. Als Weißmacher werden Titandioxid ($TiO_2$) und/oder Kalziumkarbonat ($CaCo_3$) verwendet. Außerdem kann der Deckschicht
während der Extrusion ein Treibmittel zugesetzt werden, das
die Folie in eine Schaumkunststoffolie mit geschlossenen Poren überführt, die dann eine Dicke von etwa $150\mu$ aufweist.
Ferner ist es möglich, die Deckschicht mit flammhemmenden Zusätzen zu versehen, um die Entflammbarkeit der Tapete herabzusetzen.

Besonders zweckmäßig ist es, wenn die Deckschicht eine Folie
aus geschäumtem Weich-Polyäthylen mit einer Dichte bis 0,925
ist, die dann eine Dicke von $150\mu$ aufweist, auf ihrer Oberfläche mit wasch- und kratzfesten Farben bedruckt, mit einem
Acrylat-Mattlack überzogen und mit Prägemustern versehen ist.
Da Folien aus Weich-Polyäthylen sehr elastisch sind, wird die
Verarbeitbarkeit auch bei einer Dicke von $150\mu$ nicht beeinträchtigt. Vielmehr läßt sich die Verbundtapete nach der Erfindung wie eine Papiertapete schneiden, einkleistern und
kleben.

Als Trägerschicht kann Natron-Kraftpapier oder Simplex-Tapetenpapier mit einem Gewicht von $130\ g/m^2$ bzw. von $90\ g/m^2$ oder
ein ähnliches Papier mit guter Saugfähigkeit verwendet werden.
Bei der Herstellung der mehrschichtigen Tapete wird nach der
Erfindung so vorgegangen, daß einer Kunstharzfolie aus Polyäthylen oder Polypropylen, vorzugsweise aus Weich- oder Hartpolyäthylen, bei der Extrusion der Folie die gewünschten Zusatzstoffe, wie Titandioxid, Kalziumkarbonat, Treibmittel zum
Aufschäumen oder flammhemmende Mittel, zugegeben werden; diese Zusatzstoffe können der zu extrudierenden Folie in ganzer Dicke zugegeben werden. Titandioxid und Kalziumkarbonat müssen aber mindestens im Bereich der Oberfläche der Folie vorhanden sein, damit die Oberfläche der Folie ein weißes, mattes Aussehen erhält. Die Folie wird dann durch eine Corona-Behandlung sowohl auf ihrer Oberfläche als auch auf ihrer Unterfläche mit einer feinen Riffelung versehen. Unter einer "Corona-Behandlung" wird die Behandlung der Folienoberflächen mit hochfrequentem elektrischem Strom verstanden, der über zwei abgeschirmte Elektroden auf die Kunststoffoberfläche einwirkt. Durch die Hochfrequenz-Behandlung entsteht an der Oberfläche der Folien eine mikroskopisch feine Riffelung. In den Vertiefungen dieser Riffelung können sich Klebstoffe und Farben gut verankern, so daß eine ausreichende Haftung der Farben einerseits und des Klebstoffes andererseits gewährleistet ist.

Hierzu ist darauf hinzuweisen, daß die Trägerschicht aus Papier und die Deckschicht aus Kunststoff in der Kaschiermaschine absolut fest miteinander verbunden werden müssen. Der Kleber, der vorzugsweise ein wasserunlöslicher Kleber ist, muß eine so feste Verbindung der beiden Schichten miteinander herstellen, daß beim Versuch, die Schichten voneinander zu trennen, die Reißzone nicht in der Klebefuge zwischen Kunststoff und Papier, sondern innerhalb der Papierschicht liegt. Dies kann durch die Corona-Vorbehandlung der Kunststoff-Deckfolien und durch die Auswahl eines geeigneten Klebers erreicht werden.

Nach der Corona-Vorbehandlung wird die Kunstharzfolie durch den wasserunlöslichen Kleber mit dem saugfähigen Tapetenpapier zusammenkaschiert und schließlich auf ihrer Oberfläche bedruckt und mit einem Mattlack überzogen. Der Druck erfolgt in üblicher Weise auf einer Kupfertiefdruck- oder Flexodruckmaschine mit bekannten wasch- und kratzfesten Farben. Hierbei kann die Druckmaschine mit der gleichen Geschwindigkeit laufen wie bei Papiertapeten, da die Flexibilität der Papierbahn durch die aufkaschierte Kunstharzfolie nicht beeinträchtigt ist. Zur Vergütung der Oberfläche dient ein Acrylat-Mattlack, der auch schon beim Bedrucken aufgebracht werden kann
und der Tapete neben der erwünschten Wasch-, Scheuer- und
Kratzfestigkeit das Aussehen einer wertvollen Papiertapete
verleiht.

Die Tapete kann dann noch mit Prägemustern versehen werden,
wie dies auch bei Papiertapeten an sich bekannt ist.

Die Tapete nach der Erfindung hat eine matte Oberfläche und
gute Wärme- bzw. Kälteisoliereigenschaften, die durch Art
und Dicke der Kunststoffschicht nach Belieben gesteuert werden können. Sie ist waschfest und so kratz- und scheuerfest,
daß sie sogar mit einer nicht zu harten Bürste und haushaltsüblichen Reinigungsmaterialien, ja sogar mit Scheuerpulver
behandelt werden kann. Hierbei schlägt die Behandlungsflüssigkeit nicht auf das Papiermaterial durch, so daß ein Erweichen
und Ablösen der Papierschicht von der Wand nicht befürchtet
werden muß.

Eine bevorzugte Ausführungsform der Erfindung ist in der
Zeichnung beispielsweise dargestellt, in der eine Mehrschichten-Tapete in einem Teilquerschnitt in stark vergrößertem Maßstab wiedergegeben ist.

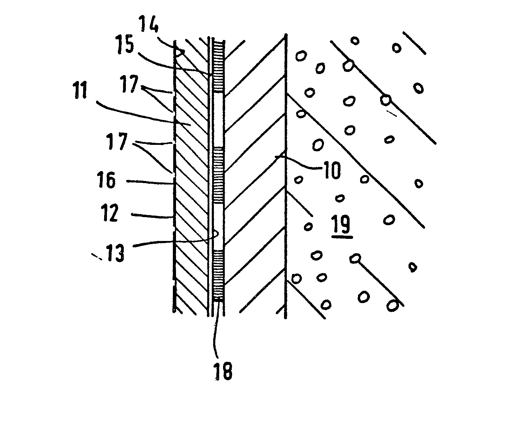

Die Tapete nach der Erfindung besteht aus einer Trägerschicht
10, einem Simplex-Tapetenpapier oder anderem geeigneten und
vor allem saugfähigen Papier mit einem Gewicht von 100 g/m$^2$
und aus einer Deckschicht 11, die von einer Folie aus Hochdruck-Polyäthylen (LDPE) gebildet wird, die eine Dicke von
45 $\mu$ und eine Dichte von 0,93 hat. Die Deckschicht 11 hat an
ihrer Oberfläche 12 und an ihrer Unterfläche 13 eine mikroskopisch feine Riffelung 14 bzw. 15, die durch eine Corona-
Behandlung erzeugt ist. Die Oberfläche 12 der Deckschicht 11
ist mit wasch- und kratzfesten Farben bedruckt und mit einem
flexiblen, matten Kunstharzlack 16 überzogen. Außerdem hat
die Oberfläche ein Prägemuster 17, deren Vertiefungen in
der Zeichnung angedeutet sind.

0098608

Die Deckschicht 11 ist mit der Trägerschicht 10 durch einen Kleber 18 vollflächig verbunden. Dieser Kleber 18 ist ein wasserfester Klebstoff auf Kunstharzbasis, der sich in der Riffelung 15 auf der Unterfläche der Deckschicht 11 verankert und fest am saugfähigen Papier der Trägerschicht 10 haftet.

Die Mehrschichten-Tapete nach der Erfindung ist dann mit ihrer Trägerschicht 10 mit Hilfe eines handelsüblichen Papierkleisters auf einer Wand oder Decke aufgeklebt, die in der Zeichnung mit dem Bezugszeichen 19 angedeutet ist.

**Zwei Ausführungsbeispiele der Erfindung werden nachfolgend angegeben.**

1. Ein Natronpapier mit einem Gewicht von 130 g/m$^2$ wird auf eine Schaumkunststoffolie aus Weich-Polyäthylen kaschiert, die eine Dicke von 150 $\mu$ hat und auf beiden Seiten corona-vorbehandelt ist. Die so erhaltene Verbundfolie wird im Vier- oder Sechsfarbenkupfertiefdruck oder -flexodruck mit wasch- und kratzbeständigen Farben mit üblichen Tapetenmustern bedruckt. In einem angeschlossenen Auftragswerk wird gleichzeitig ein Acrylat-Mattlack aufgetragen. Anschließend wird die Tapete geprägt, in der üblichen Länge von 10 m in Rollen konfektioniert und verpackt.

   Die Oberfläche der Tapete sieht aus wie eine normale Papiertapete aus Duplexpapier. Sie hat eine hervorragende Wärmeisolation und eine hohe Waschfestigkeit. Sie kann ohne Nachteile mit allen haushaltüblichen Reinigungsmaterialien, ja sogar mit Scheuerpulver gereinigt werden. Auch die Verwendung einer nicht zu harten Bürste schädigt die Oberfläche dieser Tapete nicht. Ein Feuchtigkeitsdurchschlag der Reinigungsmittel auf das Papiermaterial findet nicht statt. Die Tapete ist völlig geruchsneutral.

2. Ein Simplex-Tapetenpapier mit einem Flächengewicht von 90 g/m$^2$ wird mit einer Folie aus Weich-Polyäthylen zusammenkaschiert, die eine Dicke von 45 $\mu$ hat und auf ihrer Oberfläche und auf ihrer Unterfläche corona-vorbehandelt ist. Das Kunststoffmaterial enthält einen Zusatz an Titandioxid ($TiO_2$) und Kalziumkarbonat ($CaCo_3$), die es weiß-matt erscheinen lassen. Nach dem Kaschieren wird die Verbundfolie wie in Beispiel 1 bedruckt, lackiert und konfektioniert.

Die Tapete hat die gleichen Oberflächeneigenschaften wie die in Beispiel 1 beschriebene Tapete. Die Wärmeisolation ist etwas geringer.

Beide Tapeten werden wie Papiertapeten verarbeitet und geklebt.

0098608

Ansprüche:

1. Mehrschichten-Tapete mit einer unteren Trägerschicht
   aus Papier und einer oberen Deckschicht aus Kunstharz,
   die mit der Trägerschicht durch einen Klebstoff vollflächig verbunden und auf ihrer Oberfläche tapetenartig bedruckt und/oder mit einer Prägemusterung versehen ist, dadurch gekennzeichnet, daß die Deckschicht
   (11) aus einer Polyolefin-Folie besteht, deren Oberfläche (12) und deren Unterfläche (13) eine feine
   Riffelung (14 bzw. 15) aufweist.

2. Tapete nach Anspruch 1, dadurch gekennzeichnet, daß
   der Deckschicht (11) mindestens im Bereich ihrer
   Oberfläche (12) ein Weißmacher zugesetzt ist.

3. Tapete nach Anspruch 1 oder 2, dadurch gekennzeichnet, daß die bedruckte und/oder geprägte Oberfläche
   (12) der Deckschicht (11) mit einem flexiblen, matten Kunstharzlack (16) überzogen ist.

4. Tapete nach einem der Ansprüche 1 bis 3, dadurch gekennzeichnet, daß die Deckschicht (11) aus Polyäthylen besteht.

5. Tapete nach einem der Ansprüche 1 bis 3, dadurch gekennzeichnet, daß die Deckschicht (11) aus Polypropylen besteht.

6. Tapete nach einem der Ansprüche 1 bis 5, dadurch gekennzeichnet, daß die Deckschicht (11) eine Dicke
   von vorzugsweise 45$\mu$ bis 150$\mu$ aufweist.

7. Tapete nach einem der Ansprüche 1 bis 6, dadurch gekennzeichnet, daß der Weißmacher Titandioxid ($TiO_2$)
   und/oder Kalziumkarbonat ($CaCo_3$) ist.

0098608

8. Tapete nach einem der Ansprüche 1 bis 7, dadurch gekennzeichnet, daß die Deckschicht (11) einen flammhemmenden Zusatz aufweist.

9. Tapete nach einem der Ansprüche 1 bis 8, dadurch gekennzeichnet, daß die Deckschicht (11) eine Folie aus geschäumtem Hochdruck-Polyäthylen (LDPE) mit einer Dichte bis 0,925 ist, die eine Dicke von $150\,\mu$ aufweist, auf ihrer Oberfläche (16) mit wasch- und kratzfesten Farben bedruckt, mit einem Acrylat-Mattlack (16) überzogen und mit Prägemustern (17) versehen ist.

10. Verfahren zum Herstellen einer mehrschichtigen Tapete nach einem der Ansprüche 1 bis 9, dadurch gekennzeichnet, daß einer Kunstharzfolie aus Polyäthylen oder Polypropylen bei ihrer Extrusion die gewünschten Zusatzstoffe wie Titandioxid, Kalziumkarbonat, Treibmittel zum Aufschäumen oder flammhemmende Mittel zugegeben werden, daß die Folie dann, ggf. nach Abschluß ihrer Volumenvergrößerung, durch eine Corona-Behandlung auf ihrer Oberfläche und auf ihrer Unterfläche mit einer feinen Riffelung versehen und danach durch einen wasserunlöslichen Kleber mit einem saugfähigen Tapetenpapier zusammenkaschiert und schließlich auf ihrer Oberfläche bedruckt und mit Mattlack überzogen wird.

11. Verfahren nach Anspruch 10, dadurch gekennzeichnet, daß in die Oberfläche (12) der Deckschicht (11) nach dem Überziehen mit Mattlack (16) Muster (17) eingeprägt werden.

12. Verfahren nach einem der Ansprüche 1 bis 11, dadurch gekennzeichnet, daß das Bedrucken und Lackieren der Oberfläche der Deckschicht gleichzeitig erfolgt.

0098608

Nr 480